# EUROPEAN PATENT APPLICATION

(11) **EP 2 286 650 A2**
(43) Date of publication of application: **23.02.2011**
(21) Application number: 10173547.0
(22) Date of filing: 20.08.2010
(51) Int. Cl.: A01C 1/04

(54) **Seeded solid soil, method for plant cultivation using the same, and method for manufacturing the same**

(30) Priority: 21.08.2009 JP 2009192185
(71) Applicant: Agritecno Yazaki Co., Ltd., Himeji-shi, Hyogo-ken 670-0996 (JP)
(72) Inventor: Takeoka, Eri, Hyogo-ken 670-0996 (JP)
(74) Representative: HOFFMANN EITLE

(57) **Abstract**

A seeded solid soil (17) includes solid soil (1) for root establishment of plants, a seed (3) arranged in contact with a surface of the solid soil (1), and a coating layer (2) formed to cover the seed (3) entirely. The coating layer (2) has both adhesion properties and water retention properties.

## Description

### BACKGROUND OF THE INVENTION

### 1. FIELD OF THE INVENTION

The present invention relates to seeded solid soil in which seeds to be dispersed are previously sown on solid soil, a plant cultivation method using the same, and a method of manufacturing the seeded solid soil.

### 2. DESCRIPTION OF THE RELATED ART

As farmers are aging, sowing by hand is becoming hard work. Moreover, as gardening is becoming more popular in households, the trend of growing plants from seeds is increasing. Furthermore, many of seeds are very small. Specifically, among flower and vegetable seeds, many of light germinators requiring light for germination have a size of not more than 5.0 mm. Particularly, many of flower seeds are tiny, and there are known many flower seeds having a diameter of about 0.3 mm.

In the case where plants are cultivated from such seeds, sowing of the seeds is difficult. The seeds may be landed out of the target soil or may not take root even if falling on the target soil. Thus, it is impossible to expect good germination and growth. Moreover, in a soil having a high macroporosity or a soil which significantly sinks after watering, seeds may be buried and thereby germinate at extremely low rate.

Thus, the sowing has problems, as described above, in that the sowing work is hard and difficult, and that normal germination and growth cannot be expected because sown seeds may run off due to watering in many cases, for example. In recent years, there have been some proposals for these problems including: a method of using coated seeds which are increased in size by being coated with a talc or gel material, and a method of using a soil capsule with seeds encapsulated therein.

The entire size of such coated seeds is increased, so that the coated seeds can be sown very easily. However, in the case of gel-coated seeds, the coating layer is decomposed slowly without a decomposition accelerator depending on the environment, and germination can be therefore inhibited in some cases. In the case of talc coating seeds, it is known that the rate of germination is extremely low if the coating material has a large thickness compared to the size of the seeds. Moreover, in the case of tiny seeds, the size of the coated tiny seeds is just increased to about 0.3 mm at maximum, and accordingly the method of using the coated seeds is mostly employed for the purpose of sowing seeds of vegetable such as lettuces and Chinese cabbages with machinery.

On the other hand, in a method of sowing seeds in a diluted mixture in which the seeds are mixed with an inorganic or organic material, the seeds and the diluent material are different in particle size distribution and specific gravity, and thus are classified into different sides in the mixture. This makes it difficult to sow the seeds evenly. Accordingly, even with these methods, the rate of germination can be low. When it comes to selling households seeds in such diluted mixtures, therefore, an excessive number of seed grains are provided to secure germination. However, such seeds are excessively sown and need thinning out after germination, thus requiring extra labor in the cultivation work.

Accordingly, for example, Japanese Unexamined Patent Application Publication No. Hei 8-154425 proposes a pellet which is formed of a mixture of a soil material and an organic material and which includes seeds attached with an adhesive to a recess in a top surface of the pellet. In addition, Japanese Unexamined Patent Application Publication No. 2008-220384 proposes a seed-attached material in which seeds and/or a seed detachment preventing material are attached to a base material with an adhesive to secure a high rate of germination.

### SUMMARY OF THE INVENTION

However, in the constitution of Japanese Unexamined Patent Application Publication No. Hei 8-154425, the pellet itself plays a role like a coating of seeds, and the seeds do not take root in the pellet as apparent from the fact that the seeds are laid on each other in the recess of the pellet. In other words, the pellet is configured to absorb water to be broken down, thus allowing seeds to be sown on soil. The pellet cannot provide satisfactory rates of germination and root establishment.

On the other hand, with the constitution of Japanese Unexamined Patent Application Publication No. 2008-220384, the spherical materials with seeds attached thereto are sown on soil. As described in the publication, therefore, some of the seeds cannot germinate or cannot take root even after germination, depending on the kind or condition of the culture soil, thus making it impossible to efficiently raise seedlings.

In each of the above publications, the adhesive is used for attachment of seeds. Since the adhesive attaches seeds to the base material or the like to prevent the seeds from being detached, the adhesive has a poor water absorbing function and is easily dried up after watering. This inhibits germination of seeds and growth of roots, resulting in withering in some cases.

The present invention has been made to solve the aforementioned problems, and an object of the present invention is to provide seeded solid soil facilitating sowing work and improving rates of germination and root establishment, a plant cultivation method using the same, and a method of manufacturing the seeded solid soil.

A first aspect of the present invention is a seeded solid soil comprising: solid soil for root establishment of plants; a seed arranged in contact with a surface of the solid soil; and a coating layer formed to cover the seed entirely, wherein the coating layer has both adhesion properties and water retention properties.

The coating layer may have adhesion properties to prevent the seed from being detached from the solid soil at watering and water retention properties to prevent the coating layer from drying and supply moisture to the seed after watering.

The coating layer may include a mixture of an aqueous gelling agent and a water absorbent polymer.

The coating layer may include no hardener.

A second aspect of the present invention is a method for plant cultivation using a seeded solid soil including solid soil for root establishment of plants, a seed arranged in contact with a surface of the solid soil, and a coating layer formed to cover the seed entirely, the coating layer having both adhesion properties and water retention properties, the method comprising watering the seeded solid soil to promote germination of the seed.

A third aspect of the present invention is a method for manufacturing a seeded solid soil, the method comprising: preparing a solid soil for root establishment of plants, a seed, and a coating material; applying the coating material to the solid soil to form a coating layer having both adhesion properties and water retention properties on the solid soil; arranging the seed on a surface of the coating layer; and pressing the seed into the coating layer to a position in contact with a surface of the solid soil to cover the seed entirely with the coating layer.

According to the present invention, the seed is arranged in contact with the surface of the solid soil, thus leading to an improvement in root establishment in the solid soil after watering. Moreover, the coating layer covering the entire seed has both adhesion properties and water retention properties. Accordingly, it is possible to prevent the seed from being detached from the solid soil at watering and retain moisture in the coating layer.

Moreover, in the case of rehydrating the seeded solid soil once dried for long storage, it is possible to prevent the seed from being detached from the solid soil during drying or after rehydration and to cause the rehydrated coating layer to retain moisture.

As described above, the coating layer can supply necessary moisture to the seed, thus improving the rates of germination and root establishment.

### BRIEF DESCRIPTION OF THE DRAWINGS

Figs. 1A and 1B are views showing seeded solid soil according to an embodiment of the present invention.
Figs. 2A to 2C are views illustrating a manufacturing process of the seeded solid soil according to the embodiment of the present invention.
Figs. 3A to 3C are views illustrating a plant cultivation method using the seeded solid soil according to the embodiment of the present invention.
Figs. 4A and 4B are photographs showing states of the seeded solid soil according to the embodiment of the present invention before drying and after drying, respectively.
Fig. 5A is a photograph showing a state of the seeded solid soil according to the embodiment of the present invention which is supplied with water, and Fig. 5B is a photograph showing germination of the seeded solid soil.
Fig. 6 is a table showing a comparison between the seeded solid soil of the embodiment of the present invention and seeded solid soil with a coating layer made of different components at cultivation of plants using the same.
Fig. 7 is a view showing an example of the seeded solid soil having solid soil of a different shape.
Fig. 8 is a view showing germination of the seeded solid soil of Fig. 7 which is installed in a planting unit.
Fig. 9 is a view of a green wall made by using the planting unit of Fig. 8.

### DETAILED DESCRIPTION OF THE EMBODIMENT

Hereinafter, an embodiment of the present invention is described with reference to the drawings. The drawings are schematic and are different from real ones. Some portions in each drawing have different dimensional relationship or proportions from those of another drawing.

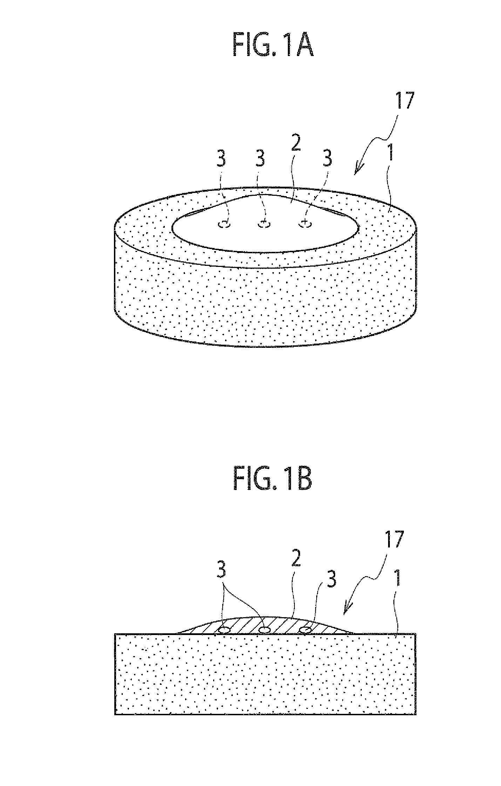

Figs. 1A and 1B show a constitution of seeded solid soil according to an embodiment of the present invention: Fig. 1A showing a perspective view of a seeded solid soil 17, and Fig. 1B showing a cross-sectional view of Fig. 1A. Seeds 3 are arranged in contact with a surface of a solid soil 1. In Figs. 1A and 1B, the number of the seeds 3 is three, as an example, but may be any number as long as the seeds can be arranged in contact with the surface of the solid soil 1. Desirably, the seeds 3 are arranged at certain intervals so that adjacent ones of the seeds 3 do not come into contact with each other. The solid soil 1 does not need to be cylindrical as shown in Figs. 1A and 1B and may be rectangular as described later. The shape of the solid soil 1 is not particularly limited. However, the solid soil 1 desirably has a plate shape in some cases in the light of easy arrangement of the seeds 3 and stable installation of the solid soil 1.

Herein, the solid soil 1 is composed of soil solidified in a solid form and includes solidified soil including a seedling soil solidified using a solidifying agent and soil compressed and solidified by pressure applied with a pressing machine or the like. The solid soil 1 is mainly composed of peat moss, coco peat, pearlite, vermiculite, or the like. The solid soil 1 may be a solid soil of hydration type. Known examples of the solid soil of hydration type are Jiffy plate (sold by SAKATA SEED CORPORATION) and Verdenite (sold by Ozeki Industrial Co., Ltd), both of which are mainly composed of peat moss.

On the other hand, a coating layer 2 is formed so as to cover entire surfaces of the seeds 3. The coating layer 2 has adhesion properties to prevent the seeds 3 from being detached from the solid soil 1 when the seeded solid soil 17 is supplied with water, and also has water retention properties to make the rehydrated and restored coating layer 2 hard to dry and supply water to the seeds 3. In order to secure the adhesion properties, for example, the aqueous gelling agent is used, and in order to secure the water retention properties, water absorbent polymer is used. The coating layer 2 is composed of a mixture of the aqueous gelling agent and water absorbent polymer, for example.

The aqueous gelling agent used herein only needs to be a uniform fluid having a high viscosity, and can be widely selected from natural gel, synthesis organic gel, inorganic gel, and the like, for example. Preferably, the aqueous gelling agent is safe to use without affecting not only plant bodies but also human bodies. Here, examples of the plants include an alkali salt of alginic acid, an alkali salt of carboxymethyl cellulose, an alkali salt of polyacrylic acid, carrageenan, gelatin and agar.

The water absorbent polymer includes various types of water absorbent polymers such as sulfonate based polymers, starch based polymers, carboxymethyl cellulose-based polymers. Carboxymethyl cellulose-based water absorbent polymers are especially preferred because the carboxymethyl cellulose-based water absorbent polymers are nontoxic and are biodegradable, thus causing no environmental problem or the like.

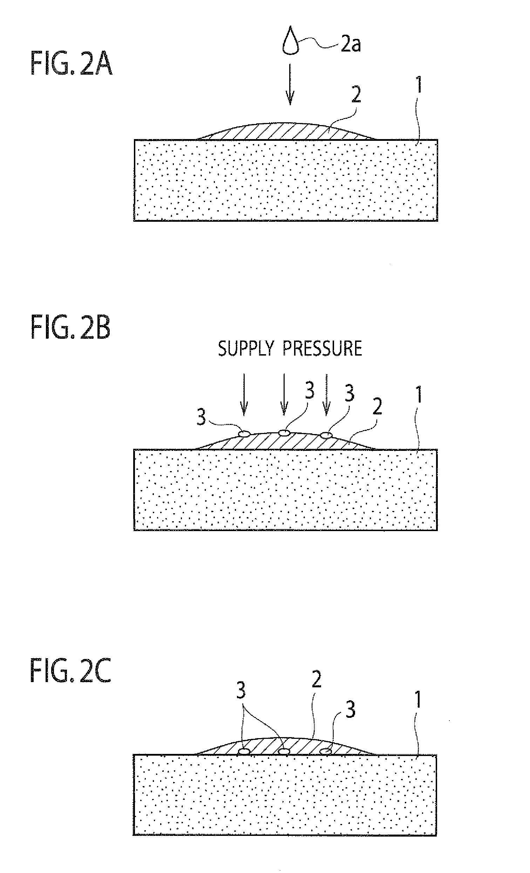

Figs. 2A to 2C show a method of manufacturing the seeded solid soil 17 of Figs. 1A and 1B. First, as shown in Fig. 2A, a proper amount of coating material 2a as a raw material of the coating layer 2 is dropped onto the solid soil 1. Next, as shown in Fig. 2B, the seeds 3 are placed at proper positions on the surface of the coating layer 2 and then pressed down with a stick into the coating layer 2. At this time, the seeds 3 may be pressed using a pair of tweezers or the like or using a machine automatically pressing with a stick. Finally, as shown in Fig. 2C, the pressing is released when the seeds 3 are arranged in contact with the surface of the solid soil 1.

In this state, the seeded solid soil 17 may be watered and used for waiting germination from the seeds 3. On the other hand, for long storage, the seeded solid soil 17 is dried, and especially the coating layer 2 is dried. The drying is performed at such a temperature that does not damage the seeds 3 until moisture percentage of the coating layer 2 is reduced to the extent that the seeds 3 cannot germinate. For example, drying is airflow drying at room temperature for about one or two hours.

As described above, in the process of manufacturing the seeded solid soil 17, as shown in Figs. 2A and 2B, the coating material 2a as the raw material of the coating layer 2 is first dropped before the seeds 3 are arranged and pressed. On the other hand, there is a method of first arranging the seeds 3 on the solid soil 1 and then dropping the coating material 2a. However, the dropped coating material 2a can move the seeds 3, or the coating material 2a cannot be dropped to a proper amount. Accordingly, it is better that the seeded solid soil 17 is manufactured as shown in Figs. 2A to 2C. Moreover, if the seeds 3 are not pressed in Fig. 2B and the seeded solid soil 1 is dried with the seeds 3 left on the surface of the coating layer 2, the rehydrated seeded solid soil 17 is restored with the seeds 3 left on the surface of the coating layer 2. For this reason, the seeds 3 are separated from the solid soil 1 and hardly take root.

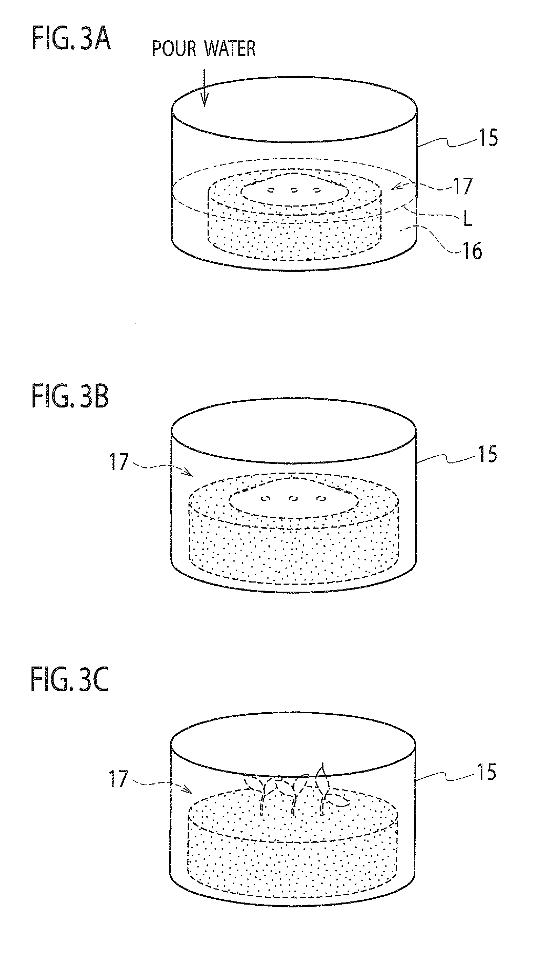

Figs. 3A to 3C are views illustrating a method of rehydrating the seeded solid soil 17 manufactured as described above for cultivation. Fig. 3A shows the seeded solid soil 17 put in a container 15 with water poured to a dashed line L in the container 15. Reference numeral 16 of Fig. 3A indicates poured water. The poured water rehydrates and restores the seeded solid soil 17 into a state shown in Fig. 3B. The amount of water poured in the container 15 is desirably such an amount that the shape of the solid soil 1 does not collapse. Moreover, as a method of rehydration and restoration other than the above method, a proper amount of water may be put in the container 15 in advance, and the seeded solid soil 17 is immersed into the water in the container 15.

Herein, even if the coating layer 2 of the seeded solid soil 17 is not immersed in water and is not directly supplied with water, the water penetrates through to the coating layer 2 from the solid soil 1 if the solid soil 1 absorbs enough water. Since the coating layer 2 has both adhesion and water retention properties, the coating layer 2 can prevent the seeds 3 from running off and also retain water around the seeds 3 to supply the seeds 3 with moisture necessary for germination. Fig. 3C shows seedling establishment after germination from the seeds 3. The solid soil 1 can retain moisture around the seeds 3, and as shown in Fig. 3C, the coating layer 2 is decomposed and removed when the seedlings are established. The container 15 has an effect on preventing the entire seeded solid soil 17 from drying after rehydration and restoration and therefore may be used in the state shown in Fig. 3C.

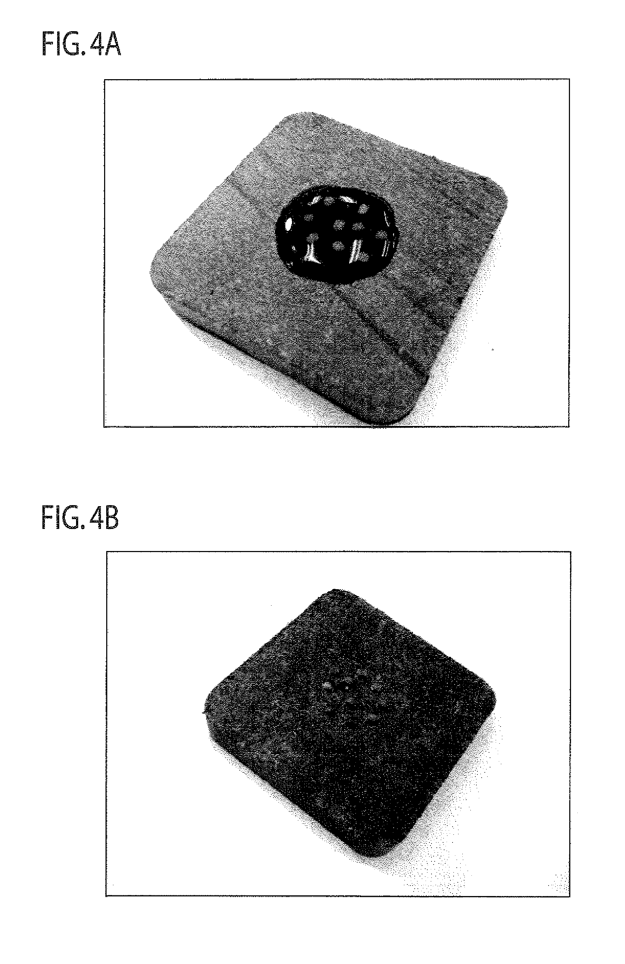

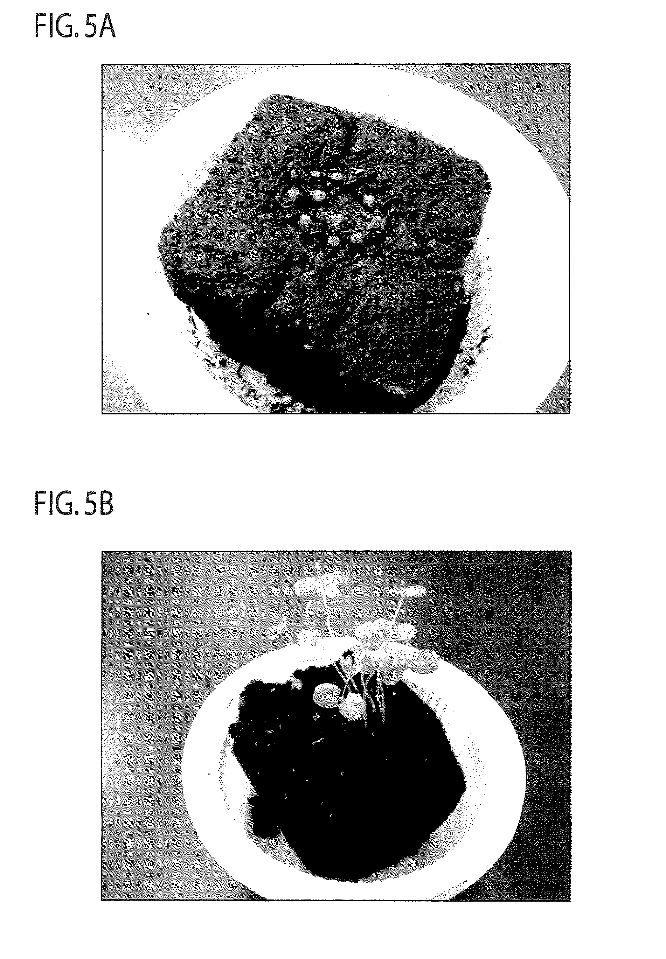

Figs. 4A and 4B as well as Figs. 5A and 5B show results from drying the seeded solid soil 17 really manufactured, supplying water for rehydration and restoration, and germinating the seeds 3. Fig. 4A is a photograph of the seeded solid soil 17 just after manufactured but before dried. Fig. 4B is a photograph of the seeded solid soil 17 after airflow drying. Fig. 5A is a photograph showing a state just after the seeded solid soil 17 is dried as shown in Fig. 4B, then is moved to the container 15, and is supplied with water for rehydration and restoration. Fig. 5B is a photograph showing a state where the seeds 3 germinate and grow from the state shown in Fig. 5A.

Next, examples and comparative examples are shown in terms of how the rate of seedling establishment changes depending on the components of the coating layer 2. The examples and comparative examples both used Jiffy plates as the solid soil 1. In the comparative example, the coating layer 2 uses only an aqueous gelling agent, and in the example, the coating layer 2 uses only a mixture of an aqueous gelling agent and a water absorbent polymer.

Tests were performed using, as the seeds 3, three types of seeds: baby's breath, cosmos, and chrysanthemum. For each type of seeds, two pieces of the seeded solid soil 17 including ten seeds sowed in the solid soil 1 were used. Accordingly, 20 seeds were used for each type of seeds. The rate of seedling establishments of the example and comparative examples were calculated for the three types of seeds, in total 60 (=3x20) seeds. Here, an aqueous alginate-based gel was used as the aqueous gelling agent, and a carboxymethyl cellulose-based water absorbent polymer was used as the water absorbent polymer.

The coating layer used in the comparative example was adjusted so that the aqueous alginate-based gel was 0.6 wt% of the aqueous solution. On the other hand, the coating layer 2 of the example was adjusted so that the aqueous alginate-based gel was 0.6 wt% of the water solution and the carboxymethyl cellulose-based water absorbent polymer was 0.96 wt% of the aqueous solution.

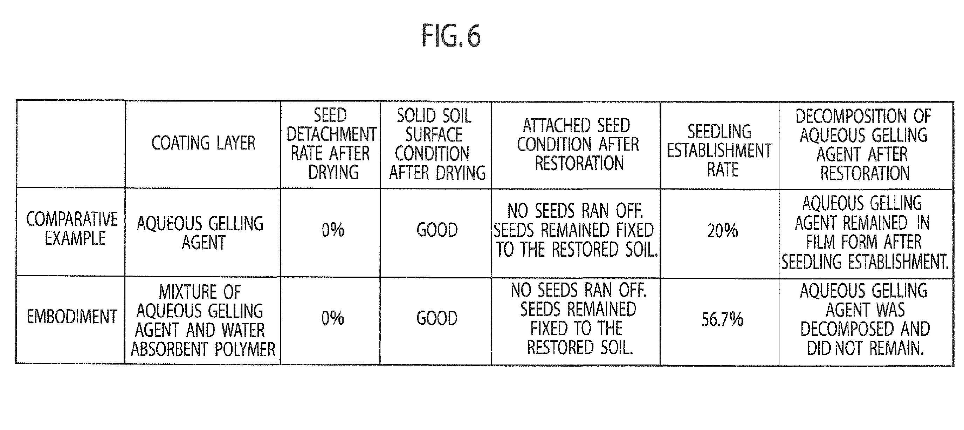

In both the comparative example and the example using the aforementioned coating layers, the rates of seedling establishment were measured after rehydration and restoration as shown in Figs. 3A to 3C or 5A and 5B after the seeds 3 were attached to the solid soil 1 followed by airflow drying. The results thereof are shown in Fig. 6. The rate of seedling establishment refers to a percentage (%) of the number of established seedlings to the number of all sowed seeds. The established seedlings refer to nondefective plant bodies with the first leaves developed completely after the seeds 3 sowed in the solid soil 1 germinate, then protrude from the coating layer, and moreover germinate out of the solid soil 1.

As apparent from Fig. 6, in each of the example and comparative example, the seed detachment rate was 0% after drying. The surface condition of the solid soil 1 after drying was good without a pile of soil. Furthermore, as for the attachment of the seeds 3 after rehydration and restoration, none of the seeds 3 were detached or ran off, and the seeded solid soil was restored with the seeds 3 fixed to the solid soil 1 in each of the example and comparative example. However, the rate of seedling establishment was 20% in the comparative example while the rate of seedling establishment was 56.7% in the example. The rates of seedling establishment thereof were different from each other by two-fold or more. The examination of the decomposition of the aqueous gelling agent after the restoration, which concerns to the rate of seedling establishment, shows that in the comparative example, the aqueous gelling agent remained in a film form even after some of the seeds 3 developed into the seedlings and that the solid soil dried quickly after watering. On the other hand, in the example, the aqueous gelling agent was decomposed and does not remain. This is because the coating layer 2 includes the water absorbent polymer and retains water for a long time.

Although not shown in Fig. 6, seeded solid soil as shown in Figs. 1A and 1B was formed as a trial by forming the coating layer using only the water absorbent polymer and attaching the seeds 3 to the solid soil 1, followed by airflow drying. This seeded solid soil was rehydrated for restoration. Some of the seeds 3 were detached after drying, and there was a pile on the surface of the solid soil 1 after drying. Furthermore, some of the seeds 3 were detached and ran off after the rehydration and restoration.

As described above, in the example, the coating material 2a as the raw material of the coating layer 2 includes an aqueous alginate-based gel, a carboxymethyl cellulose-based water absorbent polymer, and water. The restored coating layer including only the alginate-based gel is more likely to dry and repels water, so that the alginate-based aqueous gel is not decomposed and remains in a film form. In some cases, this inhibits the growth of roots and sprouts of plants, and the roots and sprouts cannot come out of the coating layer, thus resulting in death.

With only the carboxymethyl cellulose-based water absorbent polymer, the adhesion properties of the coating layer is low, and the seeds 3 are detached after drying or after rehydration for restoration. By using the mixture of the two substances, the aqueous alginate-based gel can prevent seeds from being detached during drying and thus prevent the seeds 3 from running off due to watering on the upper surface of the solid soil 1 (due to water pressure or the like) at the time of restoration. On the other hand, the carboxymethyl cellulose-based water absorbent polymer can retain moisture around the seeds 3 after restoration, thus supplying the seeds 3 with moisture necessary for germination. Moreover, the aqueous alginate-based gel is gradually decomposed after restoration by the moisture retained by the carboxymethyl cellulose-based water absorbent polymer, thus not inhibiting the growth of plants.

The percentage of the aqueous alginate-based gel in the coating layer 2 is desirably not more than 0.6 wt%. If the percentage thereof is more than 0.6 wt%, the coating material has too high viscosity to be uniformly distributed, and the coating layer is too dry after once dried and restored, thus inhibiting the growth of plants. On the other hand, the percentage of the carboxymethyl cellulose-based water absorbent polymer is desirably not more than 1 wit%. If the percentage thereof is more than 1 wt%, similarly to the aqueous alginate-based gel, the coating material has too high viscosity to be uniformly distributed and cannot be handled thereafter. The coating material is hardened after restored and dried, thus inhibiting the growth of plants.

In addition to the components of the aqueous gelling agent, water-absorbent polymer, and water, the coating material 2a as the raw material of the coating layer 2 may include starch or sugar as a nutritional substance necessary during the germination and initial growth of the seeds 3 and furthermore may include necessary amounts of known disinfectant, pesticides, animal repellant or the like if needed.

In the seeded solid soil 17 according to the embodiment of the present invention, the coating layer 2 does not include a hardener. Using a hardener such as calcium chloride solution to harden the coating layer, a coating layer insoluble to water is formed. In the process of drying, rehydration, and restoration of the coating layer, part of the water absorbent polymer in contact with calcium ions absorb little water and is hardly restored, thus preventing the germination and growth of the seeds. In the embodiment of the present invention, therefore, the hardener is not used.

As for the coating layer 2, in the case of light germinators (seeds requiring light for germination), the coating layer 2 is made clear and colorless. In the case of dark germinators (not requiring light for germination), a dispersive material having a light blocking effect is added to the coating layer 2. Thus, even when the seeds 3 are attached to the surface of the solid soil 1, the coating layer 2 can reduce incident light. Examples of the dispersive material are pigment having a light blocking effect, a dye having a light blocking effect, soil, fine vermiculite particles, sand and so on. In addition, examples of the pigments having a light blocking effect are charcoal, activated charcoal and so on. When dark germinators were cultivated for comparison using the colorless transparent coating layer 2 and using the coating layer 2 with activated charcoal added thereto, the coating layer 2 with activated charcoal added thereto provided better root establishment and improved the growth.

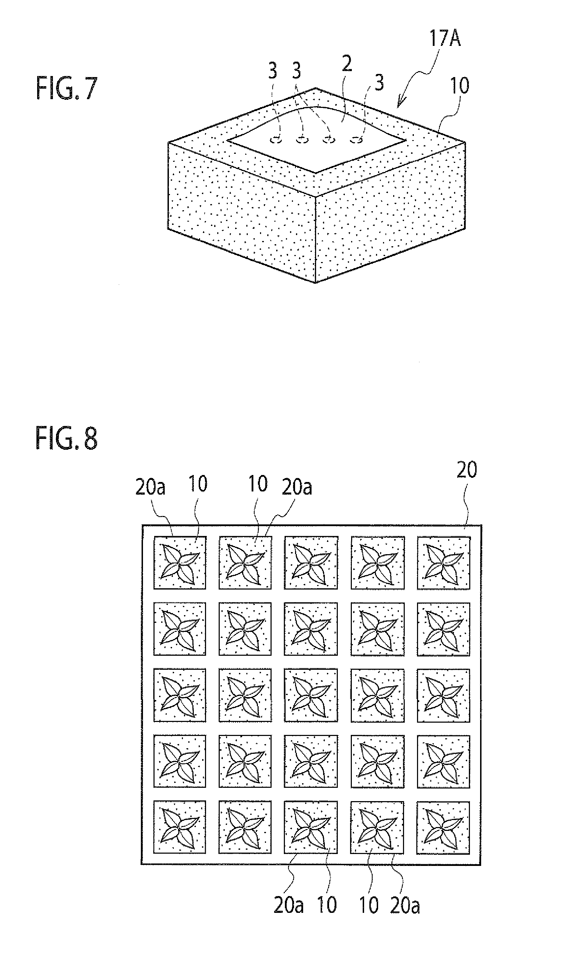

Next, an example of usage of the seeded solid soil of the present invention is shown below. A seeded solid soil 17A of Fig. 7 is different from the seeded solid soil 17 only in terms of the solid soil shape and basically has the same configuration as that of the seeded solid soil 17. The seeds 3 are arranged in contact with the surface of a solid soil 10 of the seeded solid soil 17A, and the coating layer 2 is formed so as to cover the entire seeds 3. The shape of the solid soil 10 is rectangular or cubic. Herein, the solid soil 10 may be reduced in size with the number of the seeds 3 reduced to one for use in distribution in a farm field instead of gel-coated seeds and the like. In such a case, the shape of the solid soil 10 as shown in Fig. 7 has an advantage of being less likely to roll than the gel-coated seeds and the like when the seeded solid soil 17A is distributed.

On the other hand, the seeded solid soil 17A of Fig. 7 is fixed to each of planting portions 20a of a planting unit 20, and the seeded solid soils 17A are two-dimensionally arranged to form an aggregate of the seeded solid soil. In Fig. 8, the planting portions 20a are recesses provided in the planting unit 20 and have the same shape as that of the solid soil 10. Fig. 8 schematically shows seedlings developed from germination by watering the planting portions 20a. As described above, in the case of cultivation using the seeded solid soil 17A installed in the plating unit 20, it is desirable to use solid soil which does not expand even if absorbing water after watering.

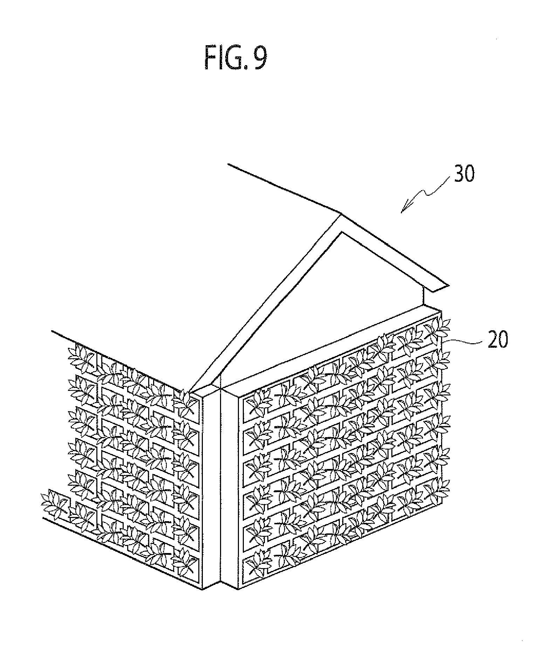

As shown in Fig. 8, the planting unit 20 having the seeded solid soils 17A two-dimensionally arranged can be used for roof greening of buildings, wall greening shown in Fig. 9, and so on. In Fig. 9, the planting units 20 to which the seeded solid soils 17A are fixed are attached to wall surfaces of a building 30. With a watering device attached to the same, plants grow from the solid soils 10 installed in the planting units 20 by watering for wall greening. Each planting unit 20 may be composed of, for example, cell trays or seedling pots according to the intended use.

## Claims

1. A seeded solid soil comprising:
solid soil for root establishment of plants;
a seed arranged in contact with a surface of the solid soil; and
a coating layer formed to cover the seed entirely,
wherein the coating layer has both adhesion properties and water retention properties.

2. The seeded solid soil according to claim 1, wherein the coating layer has adhesion properties to prevent the seed from being detached from the solid soil at watering and water retention properties to prevent the coating layer from drying and supply moisture to the seed after watering.

3. The seeded solid soil according to claim 1, wherein the coating layer includes a mixture of an aqueous gelling agent and a water absorbent polymer.

4. The seeded solid soil according to claim 3, wherein the coating layer includes no hardener.

5. A method for plant cultivation using a seeded solid soil including solid soil for root establishment of plants, a seed arranged in contact with a surface of the solid soil, and a coating layer formed to cover the seed entirely, the coating layer having both adhesion properties and water retention properties, the method comprising watering the seeded solid soil to promote germination of the seed.

6. A method for manufacturing a seeded solid soil, the method comprising:
preparing a solid soil for root establishment of plants, a seed, and a coating material;
applying the coating material to the solid soil to form a coating layer having both adhesion properties and water retention properties on the solid soil;
arranging the seed on a surface of the coating layer; and
pressing the seed into the coating layer to a position in contact with a surface of the solid soil to cover the seed entirely with the coating layer.
